Europäisches Patentamt

European Patent Office

Office européen des brevets

(19)

(11) Publication number: **0 008 942**
**B1**

(12) **EUROPEAN PATENT SPECIFICATION**

(45) Date of publication of patent specification: **08.06.83**

(21) Application number: **79301824.3**

(22) Date of filing: **05.09.79**

(51) Int. Cl.³: **C 08 L 33/00, C 09 D 3/80, B 05 D 7/16, C 23 F 7/00**

(54) Compositions and processes for coating aluminium.

(30) Priority: **06.09.78 US 939983**

(43) Date of publication of application:
**19.03.80 Bulletin 80/6**

(45) Publication of the grant of the patent:
**08.06.83 Bulletin 83/23**

(84) Designated Contracting States:
**BE CH DE FR GB IT NL SE**

(56) References cited:
**US - A - 3 585 084**
**US - A - 3 936 546**

(73) Proprietor: **Amchem Products, Inc. a Corporation organised under the Laws of the State of Delaware United States of America Brookside Avenue Ambler Pennsylvania 19002 (US)**

(72) Inventor: **Dollman, David Y.**
**3 Belmont Square**
**Doylestown, Pennsylvania (US)**
Inventor: **O'Grady, Timothy J.**
**269 North Ridge, Avenue**
**Ambler, Pennsylvania (US)**

(74) Representative: **Sanderson, Laurence Andrew et al, Sanderson & Co. 97 High Street Colchester Essex CO1 1TH (GB)**

Courier Press, Leamington Spa, England.

# 0 008 942

## Compositions and processes for coating aluminium

This invention relates to aqueous acidic solutions for coating an aluminum surface comprising polyacrylic acid or an ester thereof and fluoride added in the form of a complex fluoride. The invention also relates to processes for coating aluminium surfaces by contacting them with such compositions, and to concentrates for use in making-up and/or replenishing such compositions. By the term "aluminium" used herein is meant pure and substantially pure aluminium and alloys in which aluminium is the principal constituent.

It is well known that the appearance, corrosion resistance and paint adhesion properties of an aluminium surface may be improved by forming a chromate conversion coating on the surface. Traditionally such conversion coatings are formed by contacting the surface with a composition containing hexavalent chromium ions, phosphate ions and fluoride ions. Such coatings are disclosed in U.S. Patent Nos. 2,438,877, 2,928,763 and 3,377,212 and in British Patent Specification No. 891,910. However, growing concern in recent years about pollution of rivers and waterways has directed attention to reducing or eliminating harmful materials from the effluent of industrial processes.

Hexavalent chromium can cause serious problems if discharged into waterways because of its strongly oxidizing character. As a result, such conventional chromate conversion coating processes have required extensive waste treatment procedures to eliminate harmful effects resulting from the discharge of hexavalent chromium. This necessarily results in increased costs, and alternative processes have been developed for improving the characteristics of aluminium surfaces without the use of hexavalent chromium.

U.S. Patent 3,682,713 discloses an aqueous aluminium coating solution containing a complex fluoride of boron, titanium, zirconium or iron and an oxidizing agent such as a nitrate or sodium nitrobenzene sulphonate. Aqueous aluminium coating solutions have also been proposed which contain zirconium and/or titanium, fluoride and phosphate. However, because of environmental considerations it is desirable to produce coating solutions that do not contain phosphates, nitrates or sulphonates. As a result, coating solutions such as disclosed in U.S. Patent 3,912,548 have been developed which comprise polyacrylic acid and ammonium fluorzirconate.

However, even these modified solutions present difficulties because of the undesirable cations present in the coating solution which reduce coating efficiency.

According to the invention there are provided aqueous acidic solutions for coating aluminium, which solutions contain from 0.5 to 10 grams/litre of polyacrylic acid or an ester thereof and from 0.2 to 8 grams/litre of at least one of $H_2ZrF_6$, $H_2TiF_6$ and $H_2SiF_6$, the pH of the solution being less than 3.5. Such solutions have been found effective in providing coatings having improved corrosion resistance and paint adhesion on the treated aluminium surface notwithstanding the absence of chromate and phosphate.

The invention also provides a process for coating aluminium surfaces by contacting them with such solutions.

The invention has the advantage that it avoids the waste (effluent) disposal problems encountered with prior art compositions since any waste does not contain undesirable chromium or anions such as phosphates. The invention also enables aluminium surfaces to be coated relatively inexpensively.

As indicated previously, the term "aluminium" is intended to include alloys in which the principal ingredient is aluminium. Thus, the invention may be used in the formation of coatings on pure aluminium or on such alloys, which may be in the form of extrusions, castings and wrought or sintered alloys. Specific examples of suitable alloys include those identified by aluminium industry standard numbers 1100 (99.00% Al, 0.12% Cu), 2014 (4.4% Cu, 0.8% Si, 0.8% Mn, 0.50% Mg), 3004 (1.2% Mn, 1.0% Mg), 6061 (1.0% Mg, 0.6% Si, 0.28% Cu, 0.20% Cr) and 7075 (5.6% Ni, 2.5% Mg, 1.6% Cu, 0.23% Cr).

The coatings formed by the present invention have been found particularly useful when applied to coil stock, aluminium doors and siding.

The essential constituents of the coating solution of the invention are (i) at least one polymer selected from polyacrylic acid and its esters and (ii) at least one acid selected from the fluozirconic, fluotitanic and fluosilicic acids. Preferably the solution consists of from 1.5 to 6 grams/litre of the polymer and from 0.75 to 4 grams/litre of the acid.

The polymers used in the solutions of the invention may be water-soluble or water-dispersible polymers. In the preferred embodiment of this invention a water-soluble polyacrylic acid having a molecular weight of up to 500,000 is employed. Aqueous solutions of polyacrylic acid are available commercially, for example, as ACRYSOL A—1, ACRYSOL A—3 and ACRYSOL A—5, (which are products of Rohm and Haas Company, U.S.A. sold under the trade names given). Water-dispersible emulsions of polyacrylic acid esters, such as the methyl, ethyl and butyl esters, may also be employed. A water-dispersible emulsion of a polyacrylic acid ester which is available commercially is RHOPLEX AC—35, again a product of Rohm and Haas Company sold under that trade name.

In a preferred embodiment the invention provides a solution consisting of an aqueous acidic solution consisting of polyacrylic acid and one of $H_2ZrF_6$, $H_2SiF_6$ and $H_2TiF_6$.

2

**0 008 942**

Although it would be possible to introduce the acids into the solution as their salts—for example their sodium, potassium, and ammonium salts—this is not advisable since (a) such salts necessarily introduce additional cations into the bath which can interfere with coating formation and reduce the effectiveness of the formed coating as shown hereinafter in the Examples, and (b) the use of salts would necessitate the addition of a strong acid such as phosphoric or nitric acid to the salt mixture in order to obtain the required pH of less than 3.5, which would introduce unwanted anions such as nitrate or phosphate ions which, as stated above, are undesirable because of their environmental disadvantages.

When the acid chosen is $H_2ZrF_6$ this may be prepared extemporaneously by mixing $ZrF_6$ and HF in a molar ratio of 1:2.

The aqueous solutions of the invention have a pH of less than 3.5, and preferably less than 2.5. Tap water can be used in forming the composition, and good results have been obtained using samples of tap water. However, if tap water is used, the pH of the composition may be affected somewhat, depending upon the nature of the tap water, and therefore a final pH check is advisable to insure that the pH is less than 3.5. In this regard, it is possible, although not preferred, to adjust the acidity by introducing a strong mineral acid such as hydrochloric, sulphuric or nitric acid. In view of the sensitivity of the coating-forming ingredients to the presence of "foreign" ions, it may be preferable in some instances to use deionized water or "DI water", especially when operating at the lower limits of concentration of the coating-forming ingredients.

A fresh bath of the aqueous solution of the invention may easily be prepared by dilution of a concentrate containing the essential ingredients in the appropriate proportions. An example of such an aqueous concentrate, presented only by way of illustration, comprises a solution prepared from tap water and containing the following ingredients in the amounts indicated:

| | |
|---|---|
| polyacrylic acid (added as ACRYSOL A—1) | 82.5 grams/litre |
| $H_2TiF_6$ | 40 grams/litre |

A typical operational bath made up from such a concentrate by diluting with DI or distilled water to form a five percent solution would contain the essential ingredients in the amounts indicated below:

| | |
|---|---|
| polyacrylic acid (added as ACRYSOL A—1) | 4.13 grams/litre |
| $H_2TiF_6$ | 2.0 grams/litre |

In the coating process of the invention, the aluminium surfaces to be treated are contacted with the aqueous solution of the invention for a time and at a temperature sufficient to produce an effective coating. Typical contact times range from 2 to 40 seconds or longer, and are preferably in the range of from 10 to 25 seconds. The temperatures of the aqueous solution during the coating process is advantageously in the range of from 15°C to 65°C, preferably from 20°C to 40°C. The coating process can be carried out at atmospheric pressure, or if a higher or lower pressure is desirable for some other purpose the process may be operated at super- or sub-atmospheric pressure.

The aqueous solution of the invention may be contacted with the aluminium surface by any suitable method known by those skilled in the art, such as immersion (dipping), spraying or roller coating. After the application of the coating, the aluminium surface may be dried, preferably at a temperature of from 60°F to 500°F (15°C to 260°C), and in this way the production of any effluent · from the process is avoided.

Once application of the aqueous coating solution to the aluminium surface commences, the components of the original bath will begin to be depleted. In a continuous coating operation, it is important to replenish the solution in order to maintain the effectiveness of the coating process.

Work done in connection with the development of this invention has shown that the coating solution is depleted as a result of reactions which occur during the formation of the coating. Available fluoride (i.e. uncomplexed fluoride) is consumed as free fluoride ions become complexed with aluminium—for example a "used" coating bath may contain from 0.005 to 20 grams/litre or more of aluminium ion. Hydrogen is also consumed as the aluminium surface is coated.

In addition, ingredients are depleted as a result of drag-out from the solution on the aluminium surfaces being treated. Investigations have shown that the rate of depletion of ingredients is related to the shape of the surface being coated and the manner in which the coating solution is contacted with the aluminium surface. For example, there is a greater drag-out loss when spraying cans than when spraying strip.

The coating solution can be replenished as the ingredients are depleted. This may be accomplished either by monitoring the amount of each ingredient in the coating solution and adding the appropriate amount of this ingredient as it is depleted or by periodic addition of an aqueous concentrate of the essential ingredients of the aqueous coating solution.

The replenishing ingredients should be added to the coating solution to maintain their concentration at effective coating levels. In coating systems where there is an accumulation of aluminium in the coating solution, it is also recommended that the replenishing concentrate contains a relatively high proportion of free fluoride for complexing the aluminium, and thus prevent that aluminium .

3

from complexing fluoride from the other ingredients. The preferred source of free fluoride is hydrofluoric acid. A typical aqueous concentrate for replenishing the coating solutions of the invention is, for example:—

| polyacrylic acid | 75 grams/litre |
| $H_2TiF_6$ | 75 grams/litre |
| HF | 50 grams/litre |

For replenishment of the solution of this invention, the invention also provides an aqueous concentrate consisting essentially of:

(A) from 25 to 100 grams/litre of polyacrylic acid or an ester thereof:
(B) from 25 to 100 grams/litre of at least one of $H_2ZrF_6$, $H_2TiF_6$ and $H_2SiF_6$; and
(C) a source of free fluoride ions (preferably HF) providing from 17 to 120 grams/litre of free fluoride.

The following Examples are now given, though only by way of illustration, to show details of certain aspects of the invention. Various comparative Examples are also presented which fall outside the scope of the invention to provide comparison with the present invention.

Examples 1 to 4 and comparative examples A to D

Several coating solutions were prepared using polyacrylic acid ("ACRYSOL A—1") and an acid selected from $H_2ZrF_6$ (Example 1), $H_2TiF_6$ (Examples 2 and 3) and $H_2SiF_6$ (Example 4), in the amounts specified in Table 1 below. Comparative Examples B and C employed coating solutions containing only polyacrylic acid in amounts of 4.11 grams/litre (Comparison B) and 2.05 grams/litre (Comparison C) respectively. Comparative Example D employed a coating solution containing polyacrylic acid and ammonium fluozirconate in the amounts shown in Table 1 below. All these formulations were made up using tap water.

Panels of aluminium extrusion measuring 2.54 mm (0.1 inches) 76.2 mm (3 inches) 304.8 mm (12 inches) were cleaned with a mild alkaline phosphate cleaner. Each of the panels was then spray-coated on both sides with one of the above-described coating solutions. The panels were dried without rinsing and then heated in a warm air oven at 88°C for 5 minutes.

Comparative Example A was a control panel which was given no preliminary coating.

After cooling to room temperature, where appropriate the panels (including the panel of Comparative Example A) were spray-painted with "metallic" bronze paint. The painted panels were then baked in a hot air oven for 20 minutes at 149°C.

The painted panels were tested using the test methods given in Table A below. The test results are given in Table 1 which follows.

### TABLE A
#### Adhesion test methods

| Test | AAMA* method | ASTM method |
|---|---|---|
| Detergent, 72 hour | 6.6.3.1 | |
| Salt spray, 1000 hour | 6.7.2.1 | B—117—73 |
| Cross hatch (film adhesion) | | |
| Dry | 6.4.1.1 | |
| Wet | 6.4.1.2 | |
| Humidity, 1000 hour | 6.7.1 | D—2247—68 |
| Bend, 180° | A test for paint loss in which a painted panel is bent back on itself (i.e. through 180°) to form a sharp crease. Visual observation is made of the extent of paint loss that results on the outside surface of the crease. | |
| Boil, 20 minute | Painted test panels are placed in boiling tap water for 20 minutes. The panels are dried, and then a strip of "3M" (#610) adhesive tape (available from the Minnesota Mining and Manufacturing Company of U.S.A. under that trade designation) is applied over the painted area and pressed firmly onto the metal. The tape is then rapidly peeled off and the extent of paint removal from the metal surface is determined. | |
| Pucker | A few drops of a paint stripper (ENSIGN EPOXY STRIPPER 803, available from Ensign Products, Cleveland, U.S.A. under that trade name) are placed on a painted test panel. Visual observation is made of the time it takes for the paint to "pucker". | |

*Architectural Aluminium Manufacturers Association

### TABLE 1

| Comparison/example | A | B | C | D |
|---|---|---|---|---|
| Formulation[1] | | | | |
| Polyacrylic acid[2] | — | 4.11 | 2.05 | 2.67 |
| $(NH_4)_2ZrF_6$ | — | — | — | 1.66 |
| $H_2ZrF_6$ | — | — | — | — |
| $H_2TiF_6$ | — | — | — | — |
| $H_2SiF_6$ | — | — | — | — |
| Metal ion | | | | |
| (grams/litre) | — | — | — | 0.730 |
| Solution pH | — | 2.8 | 3.02 | ~3.9 |
| Adhesion tests | | | | |
| Bend, 180° | 100% loss | 10% loss | 20% loss | no loss |
| Detergent, 72 hr. | Failed slight loss | Failed excessive loss | Failed moderate loss | Failed excessive loss |
| Salt spray, 1000 hr. | NR[4] | pass-field blisters | pass-field blisters | NR |
| Pucker | paint loss after 21 seconds | paint loss after 35 seconds | paint loss after 35 seconds | paint loss after 90 seconds |
| Cross hatch | | | | |
| Wet | Failed excessive loss | Failed slight loss | Failed moderate loss | NR |
| Dry | No loss | No loss | No loss | NR |

TABLE 1 (continued).

| Comparison/example | 1 | 2 | 3 | 4 |
|---|---|---|---|---|
| Formulation[1] | | | | |
| Polyacrylic acid[2] | 4.11 | 4.11 | 2.05 | 4.11 |
| $(NH_4)_2ZrF_6$ | — | — | — | — |
| $H_2ZrF_6$ | 1.23 | — | — | — |
| $H_2TiF_6$ | — | 1.942 | 0.971 | — |
| $H_2SiF_6$ | — | — | — | 0.85 |
| Metal ion grams/liter | 0.540 | 0.567 | 0.284 | 0.166 |
| Solution pH | ~2.1 | ~2.1 | ~2.2 | ~2.1 |
| Adhesion tests | | | | |
| Bend, 180° | trace loss | no loss | no loss | trace loss |
| Detergent, 72 hr. | no loss | no loss | no loss | no loss |
| Salt spray, 1000 hr. | pass | pass | pass | pass-medium field blisters |
| Pucker | no loss after 10 minutes | no loss after 10 minutes | no loss after 10 minutes | no loss after 10 minutes |
| Cross hatch | | | | |
| Wet | no loss | no loss | no loss | no loss |
| Dry | no loss | no loss | no loss | no loss |

[1] Amounts are given in grams per litre of aqueous solution.
[2] Added as "ACRYSOL A—1".
[3] Prepared by mixing one mole of $ZrF_4$ with two moles of HF.
[4] "NR" denotes that the test in question was not performed (i.e., "not run").

The results presented in Table 1 clearly show the advantages of the coating solutions of the invention as compared to conventional coating solutions. Comparisons B and C (polyacrylic acid only) suffered field blisters in the salt spray test, paint loss in the pucker test after 35 seconds, and 10% and 20% paint loss, respectively, in the 180° bend test. Comparison D, which employed a formulation containing polyacrylic acid and ammonium fluozirconate, failed the 72 hour detergent test and suffered paint loss after 90 seconds in the pucker test. The control panel (Comparison A) showed poor results in each test. In contrast, Examples 1 to 3 provided excellent results in all tests. The formulation of Example 4 performed well in all tests, and gave excellent results in all but the salt spray test where the treated panel suffered some blistering of the field.

Examples 5 to 7 and comparative example E

Tests were performed on site at plants on 16 foot (4.9 metres) aluminium panel extrusions (door frames) using the coating solutions given in Table 2. Panels were dipped for 30 seconds into a 16 foot (4.9 metre) trough, containing the coating solution under test, dried and spray-painted with either a white or black topcoat.

The panels were later tested in accordance with the testing procedures of Table A. The results, which are given in Table 2, show excellent performance coating produced according to the invention using coating solutions containing polyacrylic acid in combination with either $H_2TiF_6$ (Examples 5 and 6) or $H_2SiF_6$ (Example 7). As a comparison (in the sense of being less preferred) Comparative Example E used a formulation consisting of polyacrylic acid, $HNO_3$ and $(NH_4)_2ZrF_6$ and this gave comparably good results. However, a process using the formulation of Comparative Example E would give an effluent which would require expensive treatment before it could be discharged into waterways.

6

TABLE 2—Field tests

| Comparison/example | 5 | 6 | 7 | E |
|---|---|---|---|---|
| Formulation[1] | | | | |
| polyacrylic acid[2] | 4.11 | 2.05 | 4.11 | 4.11 |
| $H_2TiF_6$ | 1.942 | 0.971 | — | — |
| $H_2SiF_6$ | — | — | 1.7 | — |
| $ZrF_6^=$ plus $H^{+[3]}$ | — | — | — | 2.45 |
| Metal ion | | | | |
| (grams/litre) | 0.567 | 0.284 | 0.331 | 1.08 |
| Solution pH | 2.04 | 2.16 | 2.24 | 2.5 |
| Adhesion tests[4] | | | | |
| Humidity, 1000 hr. | no loss | no loss | no loss | no loss |
| Salt spray 1000 hr. | slight field blisters | no loss | no loss | no loss |
| Boil, 20 minutes | no loss | no loss | no loss | no loss |
| Pucker | no loss after 10 minutes | no loss after 10 minutes | no loss after 10 minutes | no loss after 10 minutes |

[1]Amounts are given in grams per litre of total aqueous solution.
[2]Added as "ACRYSOL A—1".
[3]Prepared by mixing one mole of $(NH_4)_2ZrF_6$ and 2 moles of $HNO_3$.
[4]Conducted using white paint for Examples 5 and 6; black paint for Example 7. Identical results were achieved using white paint and black paint for Comparison E.

## Claims

1. An aqueous acidic solution for coating an aluminium surface, which solution comprises polyacrylic acid or an ester thereof and a fluoride complex characterised in that the solution contains:

(i) from 0.5 to 10 grams/litre of polyacrylic acid or an ester thereof; and
(ii) from 0.2 to 8 grams/litre of at least one of $H_2ZrF_6$, $H_2TiF_6$ and $H_2SiF_6$, the pH of the solution being less than 3.5.

2. A solution as claimed in Claim 1, characterised in that the solution contains from 1.5 to 6 grams/litre of polyacrylic acid or an ester thereof and from 0.75 to 4 grams/litre of $H_2ZrF_6$, $H_2TiF_6$ and $H_2SiF_6$.

3. A solution as claimed in Claim 1 or Claim 2, characterised in that it contains polyacrylic acid and $H_2ZrF_6$.

4. A solution as claimed in Claim 1 or Claim 2, characterised in that it contains polyacrylic acid and $H_2TiF_6$.

5. A solution as claimed in Claim 1 or Claim 2, characterised in that it contains polyacrylic acid and $H_2SiF_6$.

6. A solution as claimed in any of the preceding claims, characterised in that the pH is less than 2.5.

7. A solution as claimed in any of the preceding claims, characterised in that it excludes an oxidizing agent.

8. A solution as claimed in any of the preceding claims, characterised in that it excludes a salt.

9. A process for coating an aluminium surface by contacting the metal surface with an aqueous acidic solution as claimed in any of Claims 1—8.

10. A process as claimed in Claim 9, characterised in that after contacting the aluminium surface with the aqueous solution the coated surface is dried at a temperature of from 15°C to 260°C.

11. An aqueous concentrate composition for replenishing aqueous solutions used in coating aluminium which contains polyacrylic acid or an ester thereof and a fluoride complex characterised in that the concentrate composition contains:

(A) from 25 to 100 grams/litre of polyacrylic acid or an ester thereof;
(B) from 25 to 100 grams/litre of at least one of $H_2ZrF_6$, $H_2TiF_6$ and $H_2SiF_6$; and
(C) a source of free fluoride ions providing from 17 to 120 grams/litre of free fluoride.

12. A composition as claimed in Claim 11 characterised in that the source of free fluoride is hydrofluoric acid.

# 0 008 942

## Patentansprüche

1. Wässrige saure Lösung zum Überziehen einer Aluminiumoberfläche enthaltend Polyacrylsäure oder einen Ester davon und einen Fluorid-Komplex dadurch gekennzeichnet, daß die Lösung enthält:

(i) 0,5 bis 10 g/l Polyacrylsäure oder eines Esters davon und
(ii) 0,2 bis 8 g/l an mindestens einer der Verbindungen $H_2ZrF_6$, $H_2TiF_6$ und $H_2SiF_6$, wobei der pH-Wert der Lösung unterhalb von 3,5 liegt.

2. Lösung gemäß Anspruch 1 dadurch gekennzeichnet, daß sie 1,5 bis 6 g/l Polyacrylsäure oder eines Esters davon und 0,75 bis 4 g/l von $H_2ZrF_6$, $H_2TiF_6$ und $H_2SiF_6$ enthält.

3. Lösung gemäß Anspruch 1 oder 2 dadurch gekennzeichnet, daß sie Polyacrylsäure und $H_2ZrF_6$ enthält.

4. Lösung gemäß Anspruch 1 oder 2 dadurch gekennzeichnet, daß sie Polyacrylsäure und $H_2TiF_6$ enthält.

5. Lösung gemäß Anspruch 1 oder 2 dadurch gekennzeichnet, daß sie Polyacrylsäure und $H_2SiF_6$ enthält.

6. Lösung gemäß einem der vorgehenden Ansprüche dadurch gekennzeichnet, daß ihr pH-Wert unterhalb von 2,5 liegt.

7. Lösung gemäß einem der vorgehenden Ansprüche dadurch gekennzeichnet, daß sie kein Oxidationsmittel enthält.

8. Lösung gemäß einem der vorgehenden Ansprüche dadurch gekennzeichnet, daß sie kein Salz enthält.

9. Verfahren zum Überziehen einer Aluminiumoberfläche durch Inberührungbringen der Metalloberfläche mit einer wässrigen sauren Lösung gemäß einem der Ansprüche 1 bis 8.

10. Verfahren gemäß Anspruch 9, dadurch gekennzeichnet, daß nach dem Inberührungbringen der Aluminiumoberfläche mit der wässrigen Lösung die überzogene Oberfläche bei einer Temperatur von 15 bis 260°C getrocknet wird.

11. Wässriges Konzentrat zur Wiederauffrischung wässriger Lösungen, die zum Überziehen von Aluminium gebraucht wurden, enthaltend Plyacrylsäure oder einen Ester davon und einen Fluorid-Komplex, dadurch gekennzeichnet, daß das Konzentrat enthält:

(A) 25 bis 100 g/l Polyacrylsäure oder eines Esters davon;
(B) 25 bis 100 g/l von mindestens einem von $H_2ZrF_6$, $H_2TiF_6$ und $H_2SiF_6$ und
(C) eine Quelle freier Fluoridionen die 17 bis 120 g/l freies Fluorid liefert.

12. Zusammensetzung gemäß Anspruch 11 dadurch gekennzeichnet, daß die Quelle für freies Fluorid Fluorwasserstoffsäure ist.

## Revendications

1. Solution acide aqueuse pour revêtir une surface d'aluminium, laquelle solution comprend de l'acide polyacrylique ou un ester de celui-ci et un complexe de fluor, caractérisée en ce que la solution contient:

(i) de 0,5 à 10 g/l d'acide polyacrylique ou un ester de celui-ci; et
(ii) de 0,2 à 8 g/l d'au moins l'une des composés $H_2ZrF_6$, $H_2TiF_6$ et $H_2SiF_6$, le pH de la solution étant inférieur à 3,5.

2. Solution selon la revendication 1, caractérisée en ce que la solution contient de 1,5 à 6 g/l d'acide polyacrylique ou un ester de celui-ci et de 0,75 à 4 g/l des composés $H_2ZrF_6$, $H_2TiF_6$ et $H_2SiF_6$.

3. Solution selon la revendication 1 ou 2, caractérisée en ce qu'elle contient de l'acide polyacrylique et $H_2ZrF_6$.

4. Solution selon la revendication 1 ou 2, caractérisée en ce qu'elle contient de l'acide polyacrylique et $H_2TiF_6$.

5. Solution selon la revendication 1 ou 2, caractérisée en ce qu'elle contient de l'acide polyacrylique et $H_2SiF_6$.

6. Solution selon l'une quelconque des revendications précédentes, caractérisée en ce que le pH est inférieur à 2,5.

7. Solution selon l'une quelconque des revendications précédentes, caractérisée en ce qu'elle exclut un agent oxydant.

8. Solution selon l'une quelconque des revendications précédentes, caractérisée en ce qu'elle exclut un sel.

9. Procédé de revêtement d'une surface d'aluminium par mise en contact d'une surface en métal avec une solution acide aqueuse selon l'une quelconque des revendications 1 à 8.

10. Procédé selon la revendication 9, caractérisée en ce qu'après la mise en contact d'une surface d'aluminium avec la solution aqueuse, la surface revêtue est séchée à la température de 15 à 260°C.

11. Composition concentrée aqueuse de renouvellement de solution aqueuse utilisée dans le revêtement d'aluminium qui contient de l'acide polyacrylique ou un ester de celui-ci et un complexe de fluorure, caractérisée en ce que la composition concentrée contient:

(A) de 25 à 100 g/l d'acide polyacrylique ou un ester de celui-ci;
(B) de 25 à 100 g/l d'au moins l'un des composés $H_2ZrF_6$, $H_2TiF_6$ et $H_2SiF_6$; et
(C) une source d'ions fluorure libres fournissant de 17 à 120 g/l de fluorure libre.

12. Composition selon la revendication 11, caractérisée en ce que la source de fluorure libre est de l'acide fluorhydrique.